# EUROPEAN PATENT APPLICATION

(11) **EP 1 372 300 A1**
(43) Date of publication of application: **17.12.2003**
(21) Application number: 02360167.7
(22) Date of filing: 10.06.2002
(51) Int. Cl.: H04L 12/56

(54) **Adapting packet length to network load for VoIP communications**

(71) Applicant: ALCATEL, 75008 Paris (FR)
(72) Inventor: Penet, Xavier, 67400 Illkirch Graffenstaden (FR); Grimmer, Alain, 67400 Illkirch Graffenstaden (FR); Wilsius, Bruno, 67100 Strasbourg (FR)
(74) Representative: Rausch, Gabriele, Dr.

(57) **Abstract**

The packet length of a real-time VoIP communication is adapted dynamically to the network load. If the network is close to congestion, the packet length is increased in order to reduce the protocol overhead and to save bandwidth. As this increases the delay, smaller packets are used as soon as additional bandwith is available.
The network load is derived from the packet loss rate.

## Description

The present invention relates to a method to perform a framing in time of data when distributed into packets to be transmitted through a network. Furthermore, it is related to a private branch exchange apparatus possibly being connected to a network and comprising at least a processor on which can be run at least part of the steps to perform a framing in time of data when distributed into packets. Additionally, it is related to a terminal adapted to perform a telecommunications to be transmitted through a network and comprising a processor on which can be run at least part of the steps to perform a framing in time of data related to said telecommunications when distributed into packets.

In a circuit switching network as actual telephony network, every connection is set-up by blocking a single channel or fixing some bandwidth per connection. Such channel will be release as soon as the users decide to terminate the call. Due to the reservation of bandwidth during the complete call, the quality of the call is predictable. But this type of network has also disadvantages. At first, every connection must be set-up which consumes time and resources. Secondly, every connection has a fixed bandwidth allocated (usually 64kbps). A user can not ask for more or less bandwidth. Even during silence periods, the resources are used completely. Further unused circuit are unused capacity. Circuit switching does not provide easily the capability to fill this unused capacity with elastic traffic.

All these explains, among others, the interest to use internet protocol (IP) networks to perform usual telecommunications connections. There, no connection must be set-up. Such networks are therefore called connection-less or packet-switched networks. No resources are allocated and connectivity is already provided by IP. In that case the data (audio like voice or video messages) are transferred over that network as data stream distributed in packets using some framing. The packets will mostly follow different routes through the network, what will result in different not necessarily predictable delays (jitter delay) between them. Furthermore, the time taken to insert these packets into a network (time access) will vary a lot according to how busy this network will be. This is in fact the main cause of jitter delay. It may even vary substantially during a same telecommunications. This delay is intrinsic to the technology used like e.g. in a LAN ethernet the Carrier Sense Multiple Access/Collision Detection.

Voice over IP (VolP) is a typical application for packet-switched networks and requesting a high level of quality of service (QoS). A real time telecommunications between a sender and a receiver will then be possible only if such requirement of QoS will be fulfilled. Therefore, it is crucial to control and minimize all delays occurring on such a network. This is obtain among other by storing at the receiver some amount of received data in a buffer before restituting it (timestamp - dejittering). In such a way it is possible to rebuild the data stream with the same sequence of packets as when the data stream left the sender.

The delays occurring on a packet-switched network are mostly of two nature, one fixed due to the speed of the stream on that network, and the other variable (jitter) due to the chosen path and mostly to the amount of the already present traffic in that network. Since latter can change a lot from a telecommunications to another or even during a telecommunications e.g. due to some overload of the network at some special hours of the day, it is of interest to adapt some characteristics of the used buffer to the circumstances.

Furthermore, the bandwidth available for the transmission of packets related to a telecommunications is the result of a sharing with other application of the total existing bandwidth. It is possible to fix that sharing between the different kind of application. But the bandwidth required for e.g. VolP may be very variable in time. And if the available bandwidth is not sufficient then a certain number of packets will be lost during their transmission which will led to a degradation of the voice quality (intelligibility).

A possibility would be to use some header compression (realtime transport protocol - RTP - compression) when performing the framing of the data distributed into packets. But this RTP compression is only possible in a point to point connection between e.g. two routers of that network.

In WO97/39409 is disclosed a telecommunications system utilizing a buffer of variable size. That invention is developed in the field of native processing environment modems such to permit to adapt the software controlling the modem to the constraints of changing standards (e.g. V.32 and V.34). Two different buffer sizes are available. The choice is made according to the latency time period desired. There, small buffers will provide the telecommunications system with short and accurate response times but may increase the rate of packets lost. On the other hand, increasing the buffer size will make the modem processing more robust, reducing the implementation overhead, making it more resistant to operating system latencies and giving it greater flexibility in the exact time within the time slice i.e. between interruptions occurring during processing without necessarily disturbing the transferred data stream.

The available sizes for the buffer are already predefined in W097/39409. Therefore, the choice of the buffer size is very restricted in fact to only two values. Furthermore, the switching from one buffer size to the other one is performed in a fixed manner at some definite time identical for all telecommunications. This method is absolutely not adequate to optimize the bandwidth for a telecommunications according to the quality of transmission through a packet-switched network.

It is an object of the present invention to provide the best tradeoff between the quality of a telecommunications when transmitted through a packet-switched network and the available bandwidth.

This object is attained by a method to perform a framing in time of data when distributed into packets to be transmitted through a network as claimed in claim 1. Furthermore, the invention provides a private branch exchange apparatus to be connected to a network and comprising at least a processor on which can be run at least part of the steps to perform a framing in time of data when distributed into packets according to claim 13. Additionally, it provides a terminal adapted to perform a telecommunications to be transmitted through a network and comprising a processor according to claim 15.

Advantageously, it is suggested to adapt the used bandwidth directly to a rate measure of some lost packets. Therefore, the chosen framing for the data when distributed into packets will be defined such to minimize this packet loss. And this choice may be updated according to some specific rules e.g. following some predefined increments. In such a way, priority is given to intelligibility versus interactivity.

The method according to the present invention is adapted to be run on a private branch exchange apparatus PBX. It is particularly advantageous for telecommunications processed by said PBX and to be transmitted through a packet-switched network. It is possible to apply that method only on one side of the telecommunications i.e. the optimization of the bandwidth to be performed only on one end.

The present method is also adapted to be run on a terminal like a computer connected to a packet-switched network while said terminal contains all the technical features like a microphone and/or a screen and/or a video camera to perform a telecommunications. Latter will then be transmitted through said network via packets. This allows among other to perform a telecommunications using e.g. voice over Internet Protocol VolP.

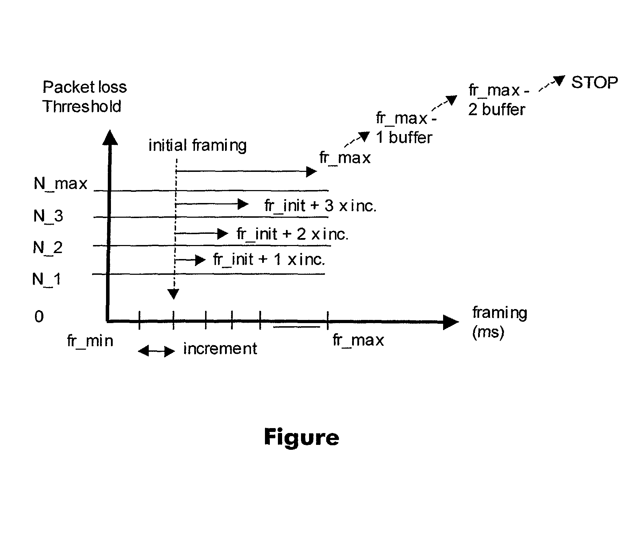

Further advantageous features of the invention are defined in the dependent claims and will become apparent from the following description and the drawing.

One embodiment of the invention will now be explained in more detail with reference to the accompanying drawing, in which:

The sole figure is a diagram of possible increments to be followed when performing the framing according to the present invention.

The bandwidth available for the transmission of packets through a network is not fixed. This implies that when the bandwidth starts to be insufficient, a certain number of packets will be lost when transmitted through said network. This is not so crucial when the packets comprise pure data not originated from some application which is crucially dependent on real time transmission. In that case, the routers or gateways in the networks will send an appropriate message so to initiate a retransmission of the lost packets.

But in the case of an application which is directly dependent on the real time taken for the transmission of packets like it is the case for a telecommunications, the lost of packets will irremediable be related to a degradation of said telecommunications. In the more particularly case of a voice telecommunications, the lost of packets will imply a degradation of the voice quality (intelligibility). The present method is dedicated to adapt the bandwidth such to minimize the packet loss. A priority of intelligibility is given versus a possible negligence of the interactivity which is related to the delay taken for the transmission.

A key point of the method according to the invention is a measure on a regular basis or according to some predefined rules of the rate of lost packets through said network. This measure will govern the used framing in time of data when distributed into packets. Thus, the size of the packets will be adapted to a measured rate of lost packets. When said rate will exceed some level said size will be increased releasing some bandwidth and implying a more robust transmission of packets. At the opposite, when said rate will fall below some level said size will be possibly decreased so to benefit of the available bandwidth.

The rules to adapt the size of the packets may follow some predefined different increments, each one corresponding to a different size of packets. Each increment is then characterized by a predefined threshold for the rate of lost packets. On the figure is shown an example of a way to adapt the size of packets according to the rate of lost packets. At first, some framing fr init is chosen according to the history of previous measurements or according to a predefined starting value. Then, a measurement is performed to test the rate of lost packets when transmitted with the chosen size fr_init through a packet-switched network. If the measurement shows an intolerable rate of lost packets or its increase above a specified value N_1, then a new size for the framing is chosen by adding one increment i.e. fr_init+1xinc. A new measurement may be performed to test the rate of lost packets when transmitted with the new chosen size fr_init+1xinc. If the measurement shows again an intolerable rate of lost packets then a second increment is considered i.e. fr_init+2xinc. And so on.

Alternately, it is possible that when a rate measurement is performed showing an intolerable value for lost packets, then a framing i.e. size of the packets is increased by jumping several increments. This shall help to reach as fast as possible a regime where the rate of lost packets begin to decrease. The number of increments which may be jumped is dependent on the value of the measured rate of lost packets. For example, if the rate is between N_2 and N_3 then it can be fixed to jump directly to a framing with a size for the packets defined by fr_init+3xinc. But, it is also possible to jump directly to a framing corresponding to a bigger size e.g. fr_max to accelerate the improvement of the transmission of packets through the network.

If the situation is not improving when reaching the last increment corresponding to the size fr_max, then it is started to skip some data of the telecommunications e.g. a basic voice buffer. If the situation is still not improving then even more data will be skipped e.g. two basic voice buffers. This can be performed till reaching an absolute limit where the decision can be taken that in view of the inadequately improvement it is better to stop the transmission of the packets corresponding to the specific started application e.g. the telecommunications.

An aim of the present invention is to optimize the size of the packets according to the available bandwidth. Therefore, if said measure rate of lost packets decrease in a sufficient manner, then a framing corresponding to a smaller packet size may be chosen. This can be performed following each successive increment corresponding to a decrease of packet size till a measured rate of lost packets is obtained which is or null or of a tolerable value. In such a way, an optimized use of the bandwidth is made.

The present method can be applied for a packet-switched network like a Local Area Network LAN using some Internet Protocol IP. It is then ideally suited for telecommunications between two far ends while said telecommunications will be transmitted at least for some part i.e. when being transmitted through said network using IP. An example could be for a voice telecommunications VolP. But it could also be applied for a video telecommunications or a combination of both.

Typically, the present method can be setup to run on a private branch exchange PBX apparatus. Such apparatus must be connected to a packet-switched network through which the data in form of packets will be transmitted. A plurality of terminals like telephone, fax or computers will be connected to said PBX apparatus. These terminals may be analogue or based itself on an IP like IP-phone or some applications on the computer using e.g. a Telephone Application Programming Interface. For the former, the digitization will fully be performed by some interface possibly included inside the PBX. For the latter, the information will be already transmitted in data form to the PBX possibly already using some framing. But the main framing defining the size of the packets to be transmitted through a network will be defined inside the PBX where an analyze of the measure rate of lost packets will be performed.

Therefore, at least part of the steps to perform a framing in time of data when distributed into packets ready to be transmitted through a network will run on a processor of said PBX apparatus. Said processor may be part of a rack.

It is also possible to run the present invention on some processor of a terminal connected to a packet-switched network. Such terminal may be a computer dedicated for telecommunications e.g. supporting VolP. In that case, the framing in time of data related to said telecommunications when distributed into packets will be chosen directly at the terminal level. In accordance with the present invention, the choice of the framing will be done after analyzing some measured rate of lost packets through the network. Therefore, said terminal must be able to measure the lost packets.

Such rate measure of the lost packets for the PBX apparatus as well as for the terminal itself may be performed using Real Time Control Protocol. Under this protocol, the success or not of the transmission of a packet is systematically provided to the source of that packet. Furthermore, that framing mechanism based on information provided by the distant via RTCP can be activated in an independent way on either end or both ends of the telecommunications.

## Claims

1. Method to perform a framing in time of data when distributed into packets to be transmitted through a network by adapting the size of the packets according to a measured rate of lost packets when transmitted through said network such that when said rate will exceed some level said size will be increased, while when said rate will fall below some level said size will be decreased.

2. Method according to claim 1, **characterized in, that** at least part of said data will be directly related to a telecommunications.

3. Method according to claim 2, **characterized in, that** when adapting said size of the packets only data related to said telecommunications will be concerned.

4. Method according to claim 1, **characterized in, that** it will follow some increments corresponding to different size of packets, each increment being **characterized by** predefined thresholds for rates of lost packets.

5. Method according to claim 4, **characterized in, that** when said measured rate will increase then said size will be increased by jumping several increments.

6. Method according to claim 4, **characterized in, that** when said measured rate will decrease then said size will be decreased by following each successive increment.

7. Method according to claim 6, **characterized in, that** said predefined size corresponding to some increment will be used as framing during a predefined time allowing a refresh of said measured rate of lost packets.

8. Method according to claim 4, **characterized in, that** if said measured rate will exceed the highest predefined threshold during a predefined time then some data will be skipped.

9. Method according to claim 8 and 2, **characterized in, that** if said skip of some data will not be followed by a decrease of measured rate then said telecommunications will be stopped.

10. Method according to claim 1, **characterized in, that** said packets will be transmitted through said network using Internet Protocol.

11. Method according to claim 10, **characterized in, that** it is optimized for voice over Internet Protocol.

12. Method according to claim 1, **characterized in, that** said measure of the rate of lost packets will be obtained using real time control protocol.

13. Private branch exchange apparatus to be connected to a network and comprising at least a processor on which can be run at least part of the steps to perform a framing in time of data when distributed into packets to be transmitted through said network by adapting the size of the packets according to a measured rate of lost packets when transmitted through said network such that when said rate will exceed some level said size will be increased, while when said rate will fall below some level said size will be decreased.

14. Private branch exchange apparatus according to claim 13, **characterized in, that** said framing adaptation of data according to said measure rate of lost packets is applied to at least some of the telecommunications to be processed by said private branch exchange apparatus and to be transmitted through said network.

15. Terminal adapted to perform a telecommunications to be transmitted through a network and comprising a processor on which can be run at least part of the steps to perform a framing in time of data related to said telecommunications when distributed into packets to be transmitted through said network by adapting the size of the packets according to a measured rate of lost packets when transmitted through said network such that when said rate will exceed some level said size will be increased, while when said rate will fall below some level said size will be decreased.

16. Terminal according to claim 15, **characterized in, that** said telecommunications is based on voice over Internet Protocol.
